# EUROPEAN PATENT APPLICATION

(11) **EP 4 755 498 A1**
(43) Date of publication of application: **10.06.2026**
(21) Application number: 25183487.5
(22) Date of filing: 17.06.2025
(51) Int. Cl.: B01F 23/2361, B01F 23/236

(54) **SPARKLING WATER MAKER WITH LOW-PRESSURE MAINTAINING FUNCTION**

(30) Priority: 04.12.2024 CN 202411769119
(71) Applicant: JIANGMEN YIKEMAITE ELECTRONIC TECHNOLOGY CO., LTD, Kaiping, Jiangmen, Guangdong 529300 (CN)
(72) Inventor: Song, Fei, Kaiping City, Jiangmen 529300 (CN)
(74) Representative: Metida

(57) **Abstract**

The present solution discloses a sparkling water maker with a low-pressure maintaining function, comprising a main unit (10), a gas bottle (12), a water bottle (11), a first mounting base (20), a first valve cavity (21), a first gas guide channel (22), a first valve body (23), a pressure feedback shutdown structure, an active vent valve body, a vent hole (25), and a first reset spring (26). After sparkling water is made, carbon dioxide gas inside the water bottle can be completely vented directly by the active vent valve body, thereby directly removing the water bottle. If a user does not need direct drinking after preparation is completed, active venting may not be performed by the active vent valve body. High-pressure carbon dioxide gas will enter the first valve cavity (21) by the first gas guide channel (22) and then will be vented along the vent hole (25). An amount of the carbon dioxide gas is controlled by the first valve body (23), and finally the water bottle is made to enter a low-pressure state with a relatively low carbon dioxide gas concentration. Since a certain carbon dioxide pressure is still maintained inside the water bottle, carbon dioxide in the sparkling water is not prone to escaping, thereby being capable of ensuring a concentration of the sparkling water, and a residual pressure can be discharged when drinking is required.

## Description

### Technical Field

The invention relates to the field of sparkling water makers, in particular to a sparkling water maker with a low-pressure maintaining function.

### Background Art

A sparkling water maker is a device for preparing sparkling water. Such a product generally comprises a main unit and a water bottle, the water bottle is filled with water and then mounted on the main unit, a carbon dioxide gas bottle and a gas path communicating the carbon dioxide gas bottle with the water bottle are arranged inside the main unit, and high-pressure carbon dioxide gas is injected into the water in the water bottle by controlling the opening of the carbon dioxide gas bottle to prepare the sparkling water. For such a product, when carbon dioxide gas is injected, the inside of the water bottle is in a high-pressure state, and then the excess carbon dioxide gas in the water bottle needs to be vented in order to remove the water bottle. However, a user prepares sparkling water usually not at the time of drinking the sparkling water. If the high-pressure carbon dioxide gas in the water bottle is directly vented after preparation is completed, the carbon dioxide will constantly escape from the sparkling water in the water bottle with temperature and over time, causing the sparkling water to have a low carbonic acid concentration and a poor taste when it needs to be drunk. If the gas is not vented after preparation is completed but vented before drinking, the water bottle will be always in an excessively high pressure state, which requires the water bottle to have high quality and easily damages the water bottle under a long time situation.

### Summary of the Invention

To solve the above-mentioned problems, the invention intends to provide a sparkling water maker with a low-pressure maintaining function.

The technical solution adopted by the present invention to solve the problems is a sparkling water maker with a low-pressure maintaining function, comprising:
a main unit, wherein a gas bottle, a water bottle and a gas path for connecting the gas bottle and the water bottle are arranged on the main unit, a gas valve is arranged on the gas path, and a switch for controlling the gas valve is arranged on the main unit;
a first mounting base, wherein the water bottle is detachably mounted on the first mounting base, a first valve cavity is arranged in the first mounting base, the first valve cavity is communicated with the water bottle by a first gas guide channel, a vent hole communicated with the first valve cavity is arranged on a surface of the first mounting base, and a pressure feedback shutdown structure and an active vent valve that are communicated with the water bottle are further arranged on the first mounting base; and
a first valve body, wherein the first valve body is arranged inside the first valve cavity, a sealing valve head for sealing a tail end of the first gas guide channel is arranged at a front end of the first valve body, a first reset spring driving the first valve body to move towards the tail end of the first gas guide channel is connected to the first valve body, and a ratio of an effective gas pressure bearing area of the first valve body located inside the first valve cavity to a cross-sectional area of the tail end of the first gas guide channel is a pressure ratio of a shut-off gas pressure to a low-pressure maintaining gas pressure.

As further improvements of the above-mentioned technical solution, a sealing piece in coordination with an inner wall of the first valve cavity is arranged on a surface of the first valve body, a second valve cavity is arranged in the first valve body, a second inlet hole and a second outlet hole that are communicated with the second valve cavity are arranged on the first valve body, the second outlet hole is communicated with the vent hole, and the second inlet hole is communicated with a portion of the first valve cavity located between the sealing piece and the tail end of the first gas guide channel; and
a second valve body is provided, the second valve body is arranged in the second valve cavity, a second reset spring connected to the second valve body and driving the second valve body to seal the second inlet hole is arranged on the second valve cavity, and a sealing gas pressure of the second valve body for the second inlet hole is lower than the low-pressure maintaining gas pressure.

As further improvements of the above-mentioned technical solution, a second valve groove is arranged at a front end of the second valve cavity, the second inlet hole is communicated into the second valve groove, a cross-sectional area of a tail end of the second valve groove is smaller than a cross-sectional area of the second valve cavity, the second outlet hole is located at a rear end of the second valve groove, and a gas guide gap is formed between the second valve body and an inner wall of the second valve cavity.

As further improvements of the above-mentioned technical solution, the sealing piece is arranged at a tail end of the first valve body, and a pressure-bearing sealing face located at a periphery of the vent hole and used for abutting against the sealing piece is arranged inside the first valve cavity.

As further improvements of the above-mentioned technical solution, the switch comprises a gas-intake link rod pivoted inside the main unit and a latch link rod pivoted inside the main unit, the gas-intake link rod opens or closes the gas valve by swinging, an elastic reset device is connected to the gas-intake link rod, and a clamping position is arranged on the gas-intake link rod; a clamping piece moveably clamped with the clamping position is arranged at one end of the latch link rod, and a third reset spring is arranged on the latch link rod; and when the gas-intake link rod is in a gas valve opened state, the third reset spring is used for driving the clamping piece to swing towards the clamping position, and the pressure feedback shutdown structure is used in coordination with the latch link rod for driving the latch link rod to overcome the third reset spring to move.

As further improvements of the above-mentioned technical solution, the pressure feedback shutdown structure is a valve rod arranged at the tail end of the first valve body, the valve rod is inserted into the vent hole, a length of the valve rod is greater than that of the vent hole, and when a gas pressure inside the water bottle reaches a specified value, the valve rod is completely pushed out to an outside of the first mounting base by the first valve body and presses the latch link rod.

As further improvements of the above-mentioned technical solution, the second outlet hole is arranged at an outer surface of the valve rod.

As further improvements of the above-mentioned technical solution, a restriction position is arranged on the latch link rod, a driving part is arranged at an outer side of a bottle mouth of the water bottle, an ejection rod is arranged on the first mounting base, a middle swing rod located between the ejection rod and the restriction position is pivoted inside the main unit, and the middle swing rod switches between a restriction state and a release state by swinging; in the restriction state, a tail end of the middle swing rod is located on a movement path of the restriction position, thus restricting the clamping piece from swinging towards the clamping position; after the water bottle is mounted on the first mounting base, the driving part is capable of driving the ejection rod to move and drive the middle swing rod to swing to the release state; and a fourth spring abutting against the ejection rod and/or the middle swing rod is arranged inside the main unit, and the fourth spring is used for driving the middle swing rod to reset to the restriction state.

As further improvements of the above-mentioned technical solution, a mounting port is arranged at a bottom of the first mounting base, a sliding groove is arranged at an inner wall of the mounting port, the ejection rod comprises a sliding block arranged in the sliding groove and used for sliding along the sliding groove, an entrance port communicated with the sliding groove is arranged at a bottom of the mounting port, and the driving part is capable of entering the sliding groove by the entrance port and driving the sliding block to slide.

As further improvements of the above-mentioned technical solution, a second mounting base and a gas bottle shield are arranged at a bottom of the main unit, the gas bottle is detachably mounted on the second mounting base, a bayonet is arranged at a periphery of the second mounting base, a rotating clamping groove in running fit with the bayonet is arranged at an inner side of the gas bottle shield, a locking groove is arranged at a top of the gas bottle shield, a locking switch is arranged inside the main unit, the locking switch comprises a driving key and a locking pin, an operating hole is arranged at a bottom face of the main unit, the driving key is located in the operating hole, the locking pin is located on the second mounting base, a fifth spring connected to the locking pin and used for driving the locking pin to move towards a direction of the locking groove is arranged on the main unit, and when the gas bottle shield is rotationally clamped on the second mounting base, the locking pin is inserted into the locking groove.

The beneficial effects of the present invention are as follows: by the pressure feedback shutdown structure, when the pressure inside the water bottle reaches a set shut-off gas pressure value in a process of preparing the sparkling water, a gas filling operation is stopped, and after the sparkling water is made, the carbon dioxide gas in the water bottle can be completely vented directly by an active vent valve body, so that a user can remove the water bottle after preparation is completed. If the user does not need to drink directly after preparation is completed, active venting may not be performed by the active vent valve body. In the solution, since the first valve cavity and the first gas guide channel are provided and the ratio of the effective gas pressure bearing area of the first valve body to the cross-sectional area of the tail end of the first gas guide channel is controlled, and since the cross-sectional area of the tail end of the first gas guide channel is small and a thrust force for the first valve body is smaller under the condition of the same gas pressure, only when the gas pressure inside the water bottle reaches the set shut-off gas pressure value, the gas pressure can overcome an elastic force of the first spring to push open the first valve body, but once the first valve body is pushed open, since the effective gas pressure bearing area of the first valve body in contact with the gas pressure is increased, the gas pressure has a greater pressure for the first valve body under the condition of the same pressure, the first valve body is completely pushed open instantly, and the gas pressure inside the water bottle is discharged by the vent hole at the moment; when the gas pressure inside the water bottle is lower than the low-pressure maintaining gas pressure, the thrust force of the gas pressure for the first valve body in the first valve cavity is smaller than the elastic force of the first reset spring at the moment, thereby causing the first valve body to reset to close the tail end of the gas guide channel and accordingly not to discharge the gas pressure inside the water bottle, and at the moment, the water bottle enters a low-pressure state with a relatively low carbon dioxide concentration; and since a certain carbon dioxide pressure is maintained in the water bottle at the moment, the carbon dioxide in the sparkling water is not prone to escaping, thereby being capable of ensuring a concentration of the sparkling water, and when drinking is required, a residual pressure is discharged by the active vent valve body.

### Brief Description of the Drawings

The present invention will be further explained with reference to the accompanying drawings and specific implementations.
FIG. 1 is one of structural schematic diagrams according to a preferred embodiment of the present invention;
FIG. 2 is a structural schematic diagram of a first valve body not pushed under a state of a cross profile in an A-A direction of FIG. 1;
FIG. 3 is a partially enlarged structural schematic diagram at Part B in FIG. 2;
FIG. 4 is a structural schematic diagram of a pushed first valve body under a state of a cross profile in an A-A direction of FIG. 1;
FIG. 5 is a partially enlarged structural schematic diagram at C in FIG. 4;
FIG. 6 is a cross-sectional structural schematic diagram along a D-D direction in FIG. 1;
FIG. 7 is a structural schematic diagram of a cross profile in an E-E direction of FIG. 1;
FIG. 8 is a second structural schematic diagram according to a preferred embodiment of the present invention;
FIG. 9 is an exploded view of the present invention;
FIG. 10 is a partially enlarged structural schematic diagram at F in FIG. 9;
FIG. 11 is an exploded view of a partial structure of a first mounting base; and
FIG. 12 is a structural schematic diagram of an ejection rod, a middle swing rod and corresponding parts.

### Detailed Description of Embodiments

This section will describe the specific embodiments of the present invention in detail. The preferred embodiments of the present invention are shown in the accompanying drawings. The accompanying drawings function as supplementing the description in the text portion of the specification with figures, so that one can intuitively and vividly understand each technical feature and the overall technical solution of the present invention, but it cannot be understood as limiting the protection scope of the present invention.

In the description of the present invention, it should be understood that in terms of orientation description, orientation or position relationships indicated by terms such as "up", "down", "front", "rear", "left" and "right" are orientation or position relationships shown based on the accompanying drawings, and are only for facilitating the description of the present invention and simplifying the description, but not for indicating or implying that apparatuses or elements referred to must have specific orientations or be constructed and operated in specific orientations, and thus cannot be understood as limiting the present invention.

In the description of the present invention, "several" means one or more, "a plurality of" means two or more, "greater than", "smaller than", "more than", etc. are understood as excluding the number itself, and "above", "below", "within", etc. are understood as including the number itself. "First", "second", etc., if described, are for the purpose of distinguishing technical features only, but should not be understood as indicating or implying a relative importance or implicitly indicating the number of technical features indicated or implicitly indicating the precedence of technical features indicated.

In the description of the present invention, unless otherwise clearly defined, terms such as "arrange", "mount" and "connect" should be understood in a broad sense, and those skilled in the art can reasonably determine the specific meanings of the above terms in the present invention with reference to the specific content of the technical solution.

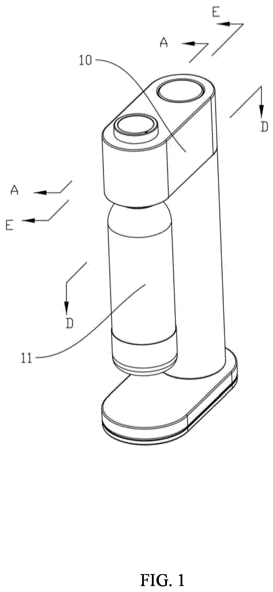

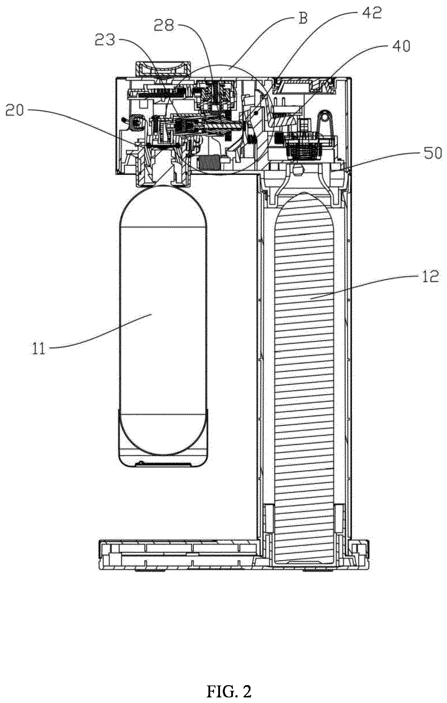

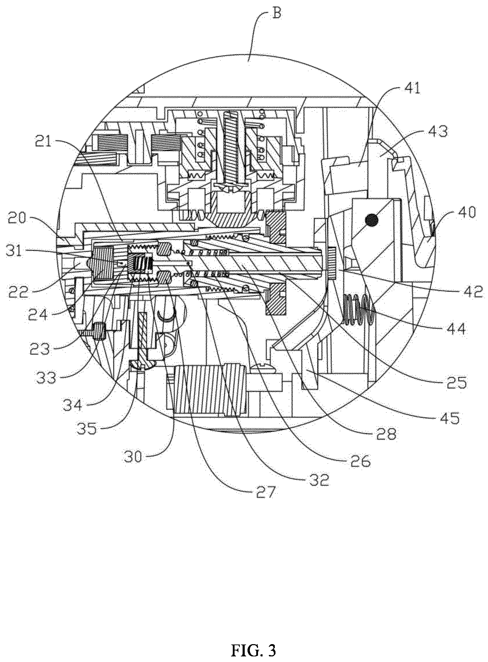

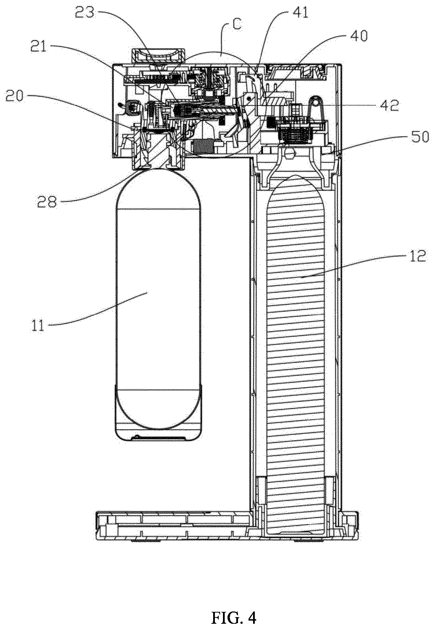

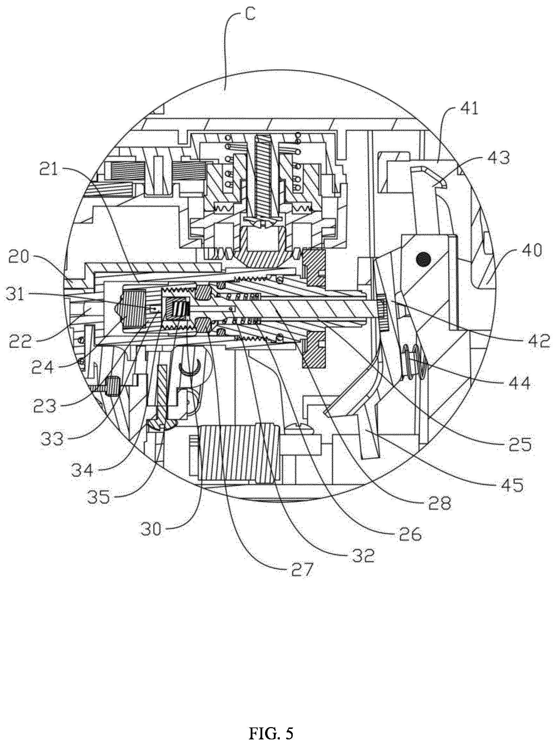

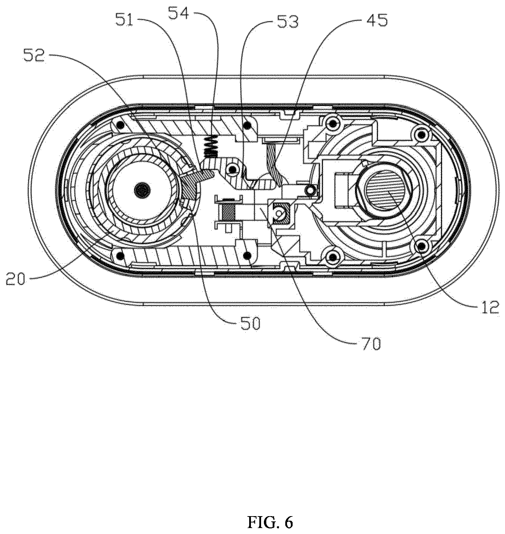

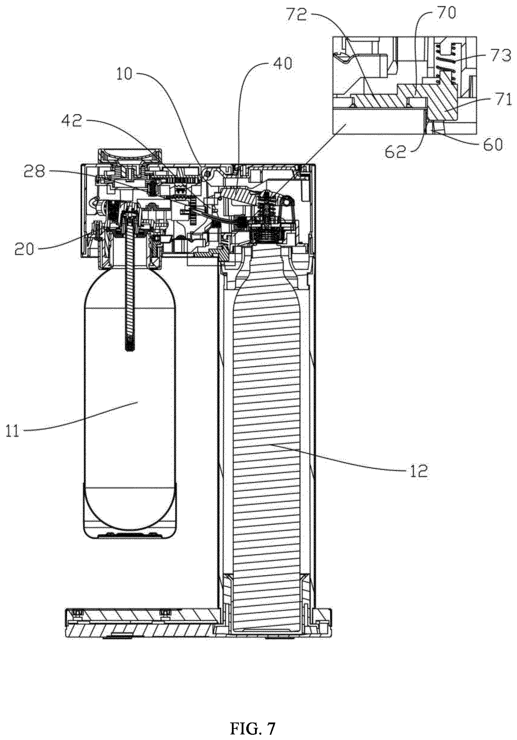

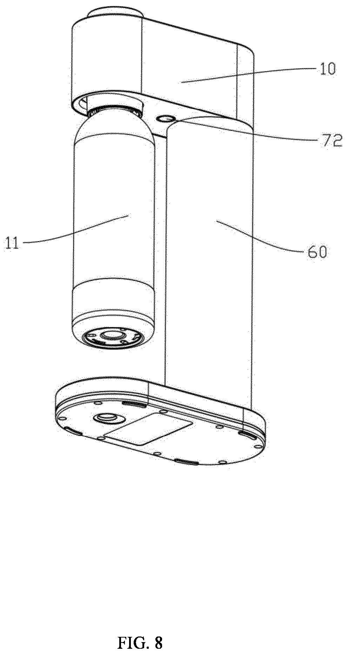

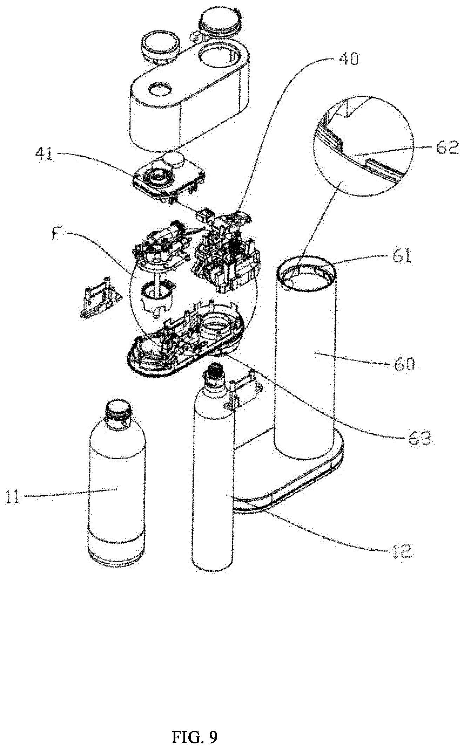

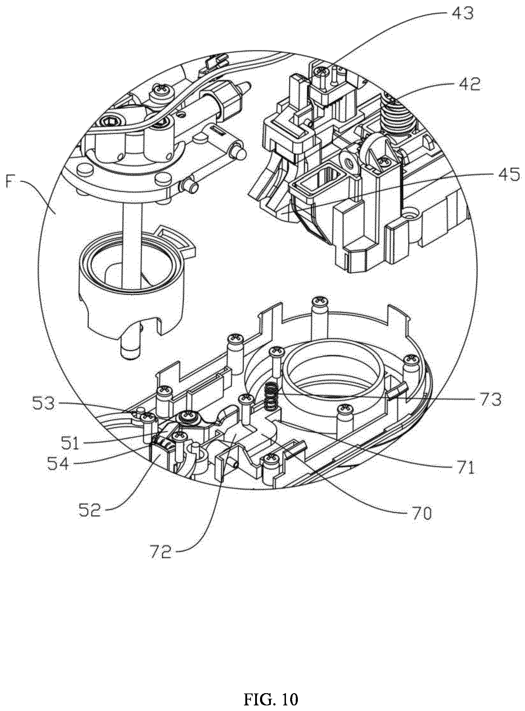

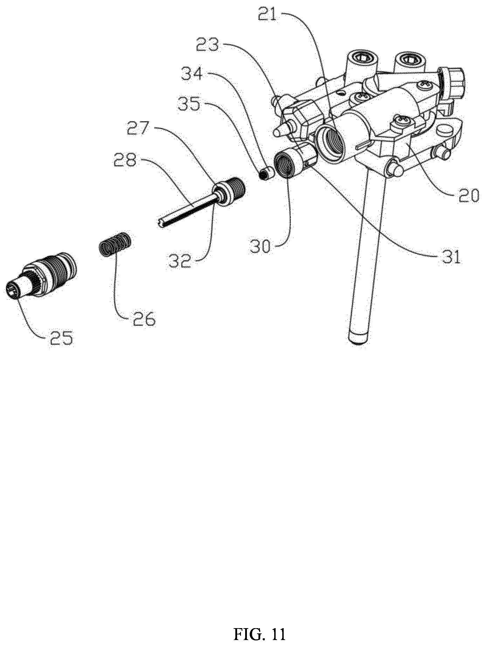

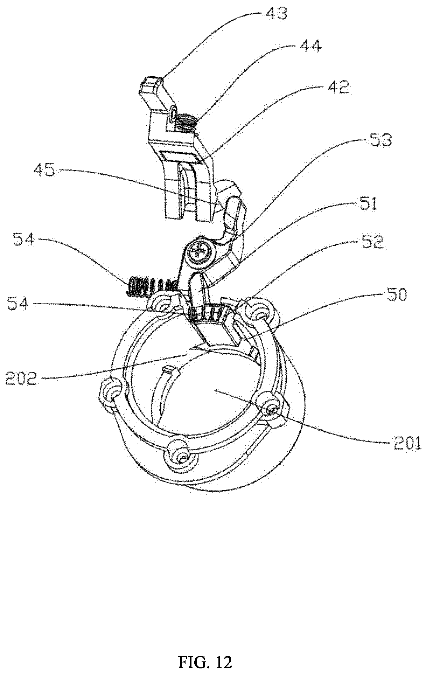

Referring to FIG. 1 to FIG. 12, a sparkling water maker with a low-pressure maintaining function comprises:
a main unit 10, wherein a gas bottle 12, a water bottle 11 and a gas path for connecting the gas bottle 12 and the water bottle 11 are arranged on the main unit 10, a gas valve is arranged on the gas path, and a switch for controlling the gas valve is arranged on the main unit 10;
a first mounting base 20, wherein the water bottle 11 is detachably mounted on the first mounting base 20, a first valve cavity 21 is arranged in the first mounting base 20, the first valve cavity 21 is communicated with the water bottle 11 by a first gas guide channel 22, a vent hole 25 communicated with the first valve cavity 21 is arranged on a surface of the first mounting base 20, and a pressure feedback shutdown structure and an active vent valve that are communicated with the water bottle 11 are further arranged on the first mounting base 20; and
a first valve body 23, wherein the first valve body 23 is arranged inside the first valve cavity 21, a sealing valve head 24 for sealing a tail end of the first gas guide channel 22 is arranged at a front end of the first valve body 23, a first reset spring 26 driving the first valve body 23 to move towards the tail end of the first gas guide channel 22 is connected to the first valve body 23, and a ratio of an effective gas pressure bearing area of the first valve body 23 located inside the first valve cavity 21 to a cross-sectional area of the tail end of the first gas guide channel 22 is a pressure ratio of a shut-off gas pressure to a low-pressure maintaining gas pressure.

By the pressure feedback shutdown structure, when the pressure inside the water bottle 11 reaches a set shut-off gas pressure value in a process of preparing the sparkling water, a gas filling operation is stopped, and after the sparkling water is made, the carbon dioxide gas in the water bottle 11 can be completely vented directly by an active vent valve body, so that a user can remove the water bottle 11 after preparation is completed. If the user does not need to drink directly after preparation is completed, active venting may not be performed by the active vent valve body. In the solution, since the first valve cavity 21 and the first gas guide channel 22 are provided and the ratio of the effective gas pressure bearing area of the first valve body 23 to the cross-sectional area of the tail end of the first gas guide channel 22 is controlled, and since the cross-sectional area of the tail end of the first gas guide channel 22 is small and a thrust force for the first valve body 23 is smaller under the condition of the same gas pressure, only when the gas pressure inside the water bottle 11 reaches the set shut-off gas pressure value, the gas pressure can overcome an elastic force of the first spring to push open the first valve body 23, but once the first valve body 23 is pushed open, since the effective gas pressure bearing area of the first valve body 23 in contact with the gas pressure is increased, the gas pressure has a greater pressure for the first valve body 23 under the condition of the same pressure, the first valve body 23 is completely pushed open instantly, and the gas pressure inside the water bottle 11 is discharged by the vent hole 25 at the moment; when the gas pressure inside the water bottle 11 is lower than the low-pressure maintaining gas pressure, the thrust force of the gas pressure for the first valve body 23 in the first valve cavity 21 is smaller than the elastic force of the first reset spring 26 at the moment, thereby causing the first valve body 23 to reset to close the tail end of the gas guide channel 22 and accordingly not to discharge the gas pressure inside the water bottle 11, and at the moment, the water bottle 11 enters a low-pressure state with a relatively low carbon dioxide concentration; and since a certain carbon dioxide pressure is maintained in the water bottle 11 at the moment, the carbon dioxide in the sparkling water is not prone to escaping, thereby capable of ensuring a concentration of the sparkling water, and when drinking is required, a residual pressure is discharged by the active vent valve body.

For further optimization, preferably, a sealing piece 27 in coordination with an inner wall of the first valve cavity 21 is arranged on a surface of the first valve body 23, a second valve cavity 30 is arranged in the first valve body 23, a second inlet hole 31 and a second outlet hole 32 that are communicated with the second valve cavity 30 are arranged on the first valve body 23, the second outlet hole 32 is communicated with the vent hole 25, and the second inlet hole 31 is communicated with a portion of the first valve cavity 21 located between the sealing piece 27 and the tail end of the first gas guide channel 22; and
a second valve body 34 is provided, the second valve body 34 is arranged in the second valve cavity 30, a second reset spring 35 connected to the second valve body 34 and driving the second valve body 34 to seal the second inlet hole 31 is arranged on the second valve cavity 30, and a sealing gas pressure of the second valve body 34 for the second inlet hole 31 is lower than the low-pressure maintaining gas pressure. The sealing gas pressure of the second valve body 34 for the second inlet hole 31 being lower than the low-pressure maintaining gas pressure means that a value of the gas pressure required by the second valve body 34 after being pushed open to reseal the second inlet hole 31 is lower than a numerical value of the low-pressure maintaining gas pressure.

By this structure, when the gas pressure inside the water bottle 11 reaches the set shut-off gas pressure value, the first valve body 23 is first pushed open to allow the gas in the water bottle 11 to enter the first valve cavity 21, and then the gas can only enter the second valve cavity 30 along the second inlet hole 31 because the first valve body 23 is sealed with the inner wall of the first valve cavity 21, thereby pushing open the second valve body 34, and then the gas flows to the vent hole 25 along the second outlet hole 32 and is finally vented to an outside of the first mounting base 20. The purpose of arranging the second valve cavity 30 and the second valve body 34 is to slow down the rate of automatic discharge of carbon dioxide gas, thus making the process of reducing the gas pressure inside the water bottle 11 more stable.

For further optimization, preferably a second valve groove 33 is arranged at a front end of the second valve cavity 30, the second inlet hole 31 is communicated into the second valve groove 33, a cross-sectional area of a tail end of the second valve groove 33 is smaller than a cross-sectional area of the second valve cavity 30, the second outlet hole 32 is located at a rear end of the second valve groove 33, and a gas guide gap is formed between the second valve body 34 and an inner wall of the second valve cavity 30.

In the present solution, the sealing piece 27 is preferably arranged at the tail end of the first valve body 23, and a pressure-bearing sealing face located at a periphery of the vent hole 25 and used for abutting against the sealing piece 27 is arranged inside the first valve cavity 21. In this way, when the first valve body 23 is pushed open, the sealing piece 27 can be better sealed with the inner wall of the first valve cavity 21, thereby preventing the gas from directly flowing through the first valve cavity 21 to the vent hole 25. In other embodiments, the sealing piece 27 can also be sleeved on the middle of a periphery of the first valve body 23.

Here is an example, for example, the set shut-off gas pressure is 0.8Mpa, while the low-pressure maintaining gas pressure is 0.2Mpa, the pressure of the first reset spring 26 for the first valve body 23 is 10N, then the ratio of the cross-sectional area of the tail end of the first gas guide channel 22 to the effective area of the first valve body 23 bearing the gas pressure is 1:4. Since the aperture at the tail end of the first gas guide channel 22 is small, when the first valve body 23 closes the tail end of the first gas guide channel 22, a contact area between the carbon dioxide gas in the water bottle 11 and the first valve body 23 is only the area of the aperture at the tail end of the first gas guide channel 22. At the moment, only when the gas pressure inside the water bottle 11 reaches 0.8Mpa, a force exceeding 10N can be generated for the first valve body 23 to push open the first valve body 23. However, once the first valve body 23 is pushed open, the carbon dioxide gas in the water bottle 11 enters the first valve cavity 21. At the moment, an effective contact area of the carbon dioxide gas contacting the first valve body 23 and pushing the first valve body 23 to move is increased by four times, and under the circumstance of unchanged gas pressure value, a thrust force for the first valve body 23 is accordingly increased by four times to exceed 40N. At the moment, the first valve body 23 will be completely pushed open instantly. When the first valve body 23 is completely pushed open, the carbon dioxide gas in the water bottle 11 is constantly vented along the vent hole 25, and the gas pressure value is constantly decreased. After the gas pressure value of the carbon dioxide gas in the water bottle 11 is reduced to 0.2Mpa, an effective thrust force of the carbon dioxide gas for the first valve body 23 is reduced to be below 10N again at the moment. Therefore, the first valve body 23 is retracted to block the tail end of the first gas guide channel 22.

On the basis of the above-mentioned solution, preferably, the first valve body 23 is in clearance fit with the inner wall of the first valve cavity 21.

For further optimization, preferably, the switch comprises a gas-intake link rod 40 pivoted inside the main unit 10 and a latch link rod 42 pivoted inside the main unit 10, the gas-intake link rod 40 opens or closes the gas valve by swinging, an elastic reset device is connected to the gas-intake link rod 40, and a clamping position 41 is arranged on the gas-intake link rod 40; a clamping piece 43 moveably clamped with the clamping position 41 is arranged at one end of the latch link rod 42, and a third reset spring 44 is arranged on the latch link rod 42; and when the gas-intake link rod 40 is in a gas valve opened state, the third reset spring 44 is used for driving the clamping piece 43 to swing towards the clamping position 41, and the pressure feedback shutdown structure is used in coordination with the latch link rod 42 for driving the latch link rod to overcome the third reset spring 44 to move. The user presses the gas-intake link rod 40 to open the gas valve, and at the moment, the latch link rod 42 under the action of the third reset spring 44 causes the clamping piece 43 to be clamped with the clamping position 41 on the gas-intake link rod 40, thereby automatically performing the continuous intake operation. Then, when the gas pressure inside the water bottle 11 reaches the set shut-off gas pressure, the pressure feedback shutdown structure drives the latch link rod 42 to swing, thus disengaging the clamping piece 43 from the clamping position 41 and resetting the gas-intake link rod 40. The pressure feedback shutdown structure can be a pressure sensor communicated with the water bottle 11 and a drive motor electrically connected to the pressure sensor. When the pressure inside the water bottle 11 is sensed to reach the set shutdown pressure value, the drive motor is controlled to press the latch link rod 42 to disengage the clamping piece 43 from the clamping position 41.

In the present solution, in order to optimize structural settings and reduce the number of parts, preferably, the pressure feedback shutdown structure is a valve rod 28 arranged at the tail end of the first valve body 23, the valve rod 28 is inserted into the vent hole 25, a length of the valve rod 28 is greater than that of the vent hole 25, and when a gas pressure inside the water bottle 11 reaches a specified value, the valve rod 28 is completely pushed out to an outside of the first mounting base 20 by the first valve body 23 and presses the latch link rod 42, thereby causing the clamping piece 43 to be no longer clamped with the clamping position 41. On this basis, preferably, the second outlet hole 32 is arranged on an outer surface of the valve rod 28.

For further optimization, in order to make the latch link rod 42 unable to be clamped with the gas-intake link rod 40 when the water bottle 11 is not mounted on the first mounting base 20, thereby avoiding constantly opening the gas bottle 12 when the water bottle 11 is not mounted, preferably, a restriction position 45 is arranged on the latch link rod 42, a driving part is arranged at an outer side of a bottle mouth of the water bottle 11, an ejection rod 51 is arranged on the first mounting base 20, a middle swing rod 53 located between the ejection rod 51 and the restriction position 45 is pivoted inside the main unit 10, and the middle swing rod 53 switches between a restriction state and a release state by swinging; in the restriction state, a tail end of the middle swing rod 53 is located on a movement path of the restriction position 45, thus restricting the clamping piece 43 from swinging towards the clamping position 41; after the water bottle 11 is mounted on the first mounting base 20, the driving part is capable of driving the ejection rod 51 to move and drive the middle swing rod 53 to swing to the release state; and a fourth spring 54 abutting against the ejection rod 51 and/or the middle swing rod 53 is arranged inside the main unit 10, and the fourth spring 54 is used for driving the middle swing rod 53 to reset to the restriction state. By this structure, when the water bottle 11 is not mounted on the first mounting base 20, the fourth spring 54 drives the middle swing rod 53 to reset to the restriction state, and at the moment, the tail end of the middle swing rod 53 is located on the movement path of the restriction position 45, so that the latch link rod 42 cannot form effective swinging. At the moment, even if the gas-intake link rod 40 is pressed, the clamping piece 43 cannot move to a specified position under the action of the third reset spring 44, so the clamping piece 43 cannot be clamped with the clamping position 41, and the gas-intake link rod 40 is accordingly not restricted. Therefore, the gas-intake link rod 40 loosened by the user is automatically reset to avoid the phenomenon of constantly opening the gas bottle 12 when the water bottle 11 is not mounted. After the water bottle 11 is mounted on the first mounting base 20, the ejection rod 51 is driven to move, and the ejection rod 51 moves to drive the middle swing rod 53 to swing, causing the middle swing rod 53 to swing to the release state and accordingly causing the tail end of the middle swing rod 53 to be moved out of the movement path of the restriction position 45, and the latch link rod 42 can swing normally at the moment. In the present solution, preferably, a middle portion of the latch link rod 42 is pivoted inside the main unit 10, the clamping piece 43 is arranged at a top of the latch link rod 42, and the restriction position 45 is arranged at a bottom of the latch link rod 42.

In the present solution, preferably, the clamping piece 43 is one clamping hook, and the clamping position 41 is one clamping hole arranged on a gas intake pressure rod. A guide inclination surface in coordination with a surface of the gas intake pressure rod is arranged at an edge of the clamping hook. The clamping hole is located above the clamping hook. The gas intake pressure rod swings up and down. When being pressed down, the clamping hole moves downwards to make the edge of the gas intake pressure rod push the clamping hook, so that the clamping hook is clamped into the clamping hole. In other embodiments, the clamping piece 43 and the clamping position 41 can also be two hook bodies abutting to each other and other embodiments.

For further optimization, preferably, a mounting port 201 is arranged at a bottom of the first mounting base 20, a sliding groove 50 is arranged at an inner wall of the mounting port 201, the ejection rod 51 comprises a sliding block 52 arranged in the sliding groove 50 and used for sliding along the sliding groove 50, an entrance port 202 communicated with the sliding groove 50 is arranged at a bottom of the mounting port 201, and the driving part is capable of entering the sliding groove 50 by the entrance port 202 and driving the sliding block 52 to slide. When the water bottle 11 is mounted on the first mounting base 20, the driving part passes through the entrance port 202 and enters the sliding groove 50, and then the water bottle 11 is rotated to rotate the driving part in the sliding groove 50, thereby pushing the sliding block 52 to move in the sliding groove 50 and thus drive the ejection rod 51 to move.

For further optimization, preferably, a second mounting base and a gas bottle shield 60 are arranged at a bottom of the main unit 10, the gas bottle 12 is detachably mounted on the second mounting base, a bayonet 63 is arranged at an outer periphery of the second mounting base, a rotating clamping groove 61 in running fit with the bayonet 63 is arranged at an inner side of the gas bottle shield 60, a locking groove 62 is arranged at a top of the gas bottle shield 60, a locking switch 70 is arranged inside the main unit 10, the locking switch 70 comprises a driving key 72 and a locking pin 71, an operating hole is arranged at a bottom face of the main unit 10, the driving key 72 is located in the operating hole, the locking pin 71 is located on the second mounting base, a fifth spring 73 connected to the locking pin 71 and used for driving the locking pin 71 to move towards a direction of the locking groove 62 is arranged on the main unit 10, and when the gas bottle shield 60 is rotationally clamped and fitted on the second mounting base, the locking pin 71 is inserted into the locking groove 62. By this structure, one gas bottle shield 60 is arranged at a periphery of the gas bottle 12, and the gas bottle shield 60 is rotationally connected to the second mounting base by a rotating clamping groove 61 and a bayonet 63. When the gas bottle shield 60 is mounted in place, the locking pin 71 is automatically clamped into the locking groove 62 at a top of the gas bottle shield 60 under the action of the fifth spring 73, thereby restricting the rotation of the gas bottle shield 60. When it is required to remove the gas bottle shield 60, the driving key 72 is first pressed to disengage the locking pin 71 from the locking groove 62, and then the gas bottle shield 60 can be rotated and removed.

The above are only preferred embodiments of the present invention, and are not intended to limit the patentable scope of the present invention. All equivalent structural transformations made by using the content of the specification and accompanying drawings of the present invention under the inventive concept of the present invention, or directly/indirectly applied to other related technical fields are included in the patent protection scope of the present invention.

## Claims

1. A sparkling water maker with a low-pressure maintaining function, comprising:
a main unit (10), wherein a gas bottle (12), a water bottle (11) and a gas path for connecting the gas bottle (12) and the water bottle (11) are arranged on the main unit (10), a gas valve is arranged on the gas path, and a switch for controlling the gas valve is arranged on the main unit (10);
a first mounting base (20), wherein the water bottle (11) is detachably mounted on the first mounting base (20), a first valve cavity (21) is arranged inside the first mounting base (20), the first valve cavity (21) is communicated with the water bottle (11) by a first gas guide channel (22), a vent hole (25) communicated with the first valve cavity (21) is arranged on a surface of the first mounting base (20), and a pressure feedback shutdown structure and an active vent valve that are communicated with the water bottle (11) are further arranged on the first mounting base (20); and
a first valve body (23), wherein the first valve body (23) is arranged inside the first valve cavity (21), a sealing valve head (24) for sealing a tail end of the first gas guide channel (22) is arranged at a front end of the first valve body (23), a first reset spring (26) driving the first valve body (23) to move towards the tail end of the first gas guide channel (22) is connected to the first valve body (23), and a ratio of an effective gas pressure bearing area of the first valve body (23) located inside the first valve cavity (21) to a cross-sectional area of the tail end of the first gas guide channel (22) is a pressure ratio of a shut-off gas pressure to a low-pressure maintaining gas pressure.

2. The sparkling water maker with the low-pressure maintaining function according to claim 1, wherein:
a sealing piece (27) in coordination with an inner wall of the first valve cavity (21) is arranged on a surface of the first valve body (23), a second valve cavity (30) is arranged inside the first valve body (23), a second inlet hole (31) and a second outlet hole (32) that are communicated with the second valve cavity (30) are arranged on the first valve body (23), the second outlet hole (32) is communicated with the vent hole (25), and the second inlet hole (31) is communicated with a portion of the first valve cavity (21) located between the sealing piece (27) and the tail end of the first gas guide channel (22); and
a second valve body (34) is provided, the second valve body (34) is arranged inside the second valve cavity (30), a second reset spring (35) connected to the second valve body (34) and driving the second valve body (34) to seal the second inlet hole (31) is arranged on the second valve cavity (30), and a sealing gas pressure of the second valve body (34) for the second inlet hole (31) is lower than the low-pressure maintaining gas pressure.

3. The sparkling water maker with the low-pressure maintaining function according to claim 2, wherein:
a second valve groove (33) is arranged at a front end of the second valve cavity (30), the second inlet hole (31) is communicated into the second valve groove (33), a cross-sectional area of a tail end of the second valve groove (33) is smaller than a cross-sectional area of the second valve cavity (30), the second outlet hole (32) is located at a rear end of the second valve groove (33), and a gas guide gap is formed between the second valve body (34) and an inner wall of the second valve cavity (30).

4. The sparkling water maker with the low-pressure maintaining function according to claim 2, wherein:
the sealing piece (27) is arranged at a tail end of the first valve body (23), and a pressure-bearing sealing face located at a periphery of the vent hole (25) and used for abutting against the sealing piece (27) is arranged inside the first valve cavity (21).

5. The sparkling water maker with the low-pressure maintaining function according to claim 2 or 3, wherein:
the switch comprises a gas-intake link rod (40) pivoted inside the main unit (10) and a latch link rod (42) pivoted inside the main unit (10), the gas-intake link rod (40) opens or closes the gas valve by swinging, an elastic reset device is connected to the gas-intake link rod (40), and a clamping position (41) is arranged on the gas-intake link rod (40); a clamping piece (43) moveably clamped with the clamping position (41) is arranged at one end of the latch link rod (42), and a third reset spring (44) is arranged on the latch link rod (42); and when the gas-intake link rod (40) is in a gas valve opened state, the third reset spring (44) is used for driving the clamping piece (43) to swing towards the clamping position (41), and the pressure feedback shutdown structure is used in coordination with the latch link rod (42) for driving the latch link rod to overcome the third reset spring (44) to move.

6. The sparkling water maker with the low-pressure maintaining function according to claim 5, wherein:
the pressure feedback shutdown structure is a valve rod (28) arranged at the tail end of the first valve body (23), the valve rod (28) is inserted into the vent hole (25), a length of the valve rod (28) is greater than that of the vent hole (25), and when a gas pressure inside the water bottle (11) reaches a specified value, the valve rod (28) is completely pushed out to an outside of the first mounting base (20) by the first valve body (23) and presses the latch link rod (42).

7. The sparkling water maker with the low-pressure maintaining function according to claim 6, wherein:
the second outlet hole (32) is arranged on an outer surface of the valve rod (28).

8. The sparkling water maker with the low-pressure maintaining function according to claim 5, wherein:
a restriction position (45) is arranged on the latch link rod (42), a driving part is arranged at an outer side of a bottle mouth of the water bottle (11), an ejection rod (51) is arranged on the first mounting base (20), a middle swing rod (53) located between the ejection rod (51) and the restriction position (45) is pivoted inside the main unit (10), and the middle swing rod (53) switches between a restriction state and a release state by swinging; in the restriction state, a tail end of the middle swing rod (53) is located on a movement path of the restriction position (45), thus restricting the clamping piece (43) from swinging towards the clamping position (41); after the water bottle (11) is mounted on the first mounting base (20), the driving part is capable of driving the ejection rod (51) to move and drive the middle swing rod (53) to swing to the release state; and a fourth spring (54) abutting against the ejection rod (51) and/or the middle swing rod (53) is arranged inside the main unit (10), and the fourth spring (54) is used for driving the middle swing rod (53) to reset to the restriction state.

9. The sparkling water maker with the low-pressure maintaining function according to claim 8, wherein:
a mounting port (201) is arranged at a bottom of the first mounting base (20), a sliding groove (50) is arranged at an inner wall of the mounting port (201), the ejection rod (51) comprises a sliding block (52) arranged in the sliding groove (50) and used for sliding along the sliding groove (50), an entrance port (202) communicated with the sliding groove (50) is arranged at a bottom of the mounting port (201), and the driving part is capable of entering the sliding groove (50) by the entrance port (202) and driving the sliding block (52) to slide.

10. The sparkling water maker with the low-pressure maintaining function according to claim 1, wherein:
a second mounting base and a gas bottle shield (60) are arranged at a bottom of the main unit (10), the gas bottle (12) is detachably mounted on the second mounting base, a bayonet (63) is arranged at a periphery of the second mounting base, a rotating clamping groove (61) in running fit with the bayonet (63) is arranged at an inner side of the gas bottle shield (60), a locking groove (62) is arranged at a top of the gas bottle shield (60), a locking switch (70) is arranged inside the main unit (10), the locking switch (70) comprises a driving key (72) and a locking pin (71), an operating hole is arranged on a bottom face of the main unit (10), the driving key (72) is located in the operating hole, the locking pin (71) is located on the second mounting base, a fifth spring (73) connected to the locking pin (71) and used for driving the locking pin (71) to move towards a direction of the locking groove (62) is arranged on the main unit (10), and when the gas bottle shield (60) is rotationally clamped on the second mounting base, the locking pin (71) is inserted into the locking groove (62).
